# EUROPEAN PATENT APPLICATION

(11) **EP 4 606 871 A1**
(43) Date of publication of application: **27.08.2025**
(21) Application number: 24159476.1
(22) Date of filing: 23.02.2024
(51) Int. Cl.: C09D 11/38, C09D 11/101

(54) **RADIATION-CURABLE INKJET INK COMPOSITION**

(71) Applicant: Canon Production Printing Holding B.V., 5914 HH Venlo (NL)
(72) Inventor: WILLEMSE, Robin X.E., Venlo (NL); ZEELEN, Peter M.C., Venlo (NL)
(74) Representative: Canon Production Printing IP Department

(57) **Abstract**

The present invention relates to a radiation curable ink composition comprising a gellant. The present invention further relates to an ink set comprising such ink composition. The present invention further relates to a method for making such ink composition and a printing method using such ink composition.

## Description

The present invention relates to an ink composition and to an ink set comprising such ink composition. The present invention further relates to a method for preparing an ink composition. In addition, the present invention relates to a method for applying an image onto a recording medium.

### Background of the invention

Radiation-curable inkjet ink compositions are known in the art. These ink compositions comprise one or more radiation-curable components. A special class of radiation-curable inkjet ink compositions are phase change radiation-curable inkjet ink compositions. These inks are fluid at elevated temperature and become solid -even if not yet cured- at lower temperatures. These inks are typically jetted at elevated temperatures. Phase change inks may become solid or semi-solid upon cooling down on a recording medium, e.g. a sheet of paper. As a result, spread of a droplet of ink on the recording medium may be decreased and color bleeding may be prevented. An example of a phase change radiation-curable inkjet ink is a gelling radiation-curable inkjet ink. Gelling radiation-curable inkjet ink compositions typically comprise a gellant. Gellants are also known in the art as gelling agents or thickeners. Examples of gellants used in gelling radiation curable inkjet ink compositions are waxes, such as natural waxes and long chain carboxylic acids, and ketones. The presence of a gellant can cause a viscosity increase in the inkjet ink composition upon cooling of the ink composition. The viscosity increase in the ink composition should be sufficient, to adequately control droplet spreading. The use of a gellant may allow to postpone curing of the ink after applying the ink onto the recording medium.

A disadvantage of gelling inks is that the gloss level of prints made with these inks may be low. It may be desired to create printed images having a high gloss.

It is therefore an object of the present invention to provide a gelling radiation curable ink composition that provides prints having high gloss.

### Summary of the invention

The object of the invention is achieved in a radiation-curable inkjet ink composition, wherein the radiation-curable inkjet ink composition comprises an ester compound, the ester compound consisting essentially of a condensation product of a first reactant and a second reactant, wherein the first reactant is a compound A comprising at least 5 first functional groups, and wherein the second reactant comprises at least one compound B, wherein the at least one compound B comprises a second functional group, wherein the first functional group is a first group selected from a hydroxyl functional group and a carboxylic acid functional group and the second functional group is a second group selected from a hydroxyl functional group and a carboxylic acid functional group, wherein the first functional group is different from the second functional group, wherein compound B comprises an aliphatic group comprising at least 19 carbon atoms.

### Radiation-curable medium

The radiation-curable inkjet ink composition may comprise a radiation-curable medium. The radiation-curable medium may comprise at least one radiation-curable component. A radiation-curable component is a component that may react (e.g. polymerize) under influence of suitable radiation, such as electromagnetic radiation, e.g. ultraviolet (UV) radiation. Examples of radiation-curable components are epoxides and (meth)acrylates. (Meth-)acrylates may comprise one or more reactive groups for forming an acrylate polymer. The radiation-curable medium may comprise one type of radiation curable compound or alternatively, the radiation-curable medium may comprise a mixture of radiation-curable compounds.

The radiation-curable medium may further comprise at least one inhibitor. An inhibitor is a component that prevents (inhibits) unwanted polymerization of the radiation-curable compound. Inhibitors may be added to the radiation curable inkjet ink composition to increase the shelf life of the ink composition.

The radiation-curable medium may further comprise at least one photo initiator. A photo initiator is a component that improves the efficiency of curing; i.e. increases the polymerization rate when the ink composition is irradiated with suitable radiation, such as UV radiation.

The radiation-curable medium may further comprise a solvent, such as water or an organic solvent. The solvent may be added to the radiation curable medium to tune ink properties, such as viscosity.

Further, additional components may be added to the radiation curable medium. For example, the radiation curable medium may comprise surfactants, antibacterial components and/or anti-fungi components.

### Colorant

The radiation curable inkjet ink composition may further comprise a colorant, such as a pigment, a dye or a mixture thereof. Further, the radiation curable inkjet ink composition may comprise a mixture of dyes and/or a mixture of pigments. The colorant may provide the ink composition with a predetermined color.

### Ester compound

The radiation-curable inkjet ink composition further comprises an ester compound. The ester compound consisting essentially of a condensation product of a first reactant and a second reactant, wherein the first reactant is a compound A comprising at least 5 first functional groups, and wherein the second reactant comprises at least one compound B, wherein the at least one compound B comprises a second functional group, wherein the first functional group is a first group selected from a hydroxyl functional group and a carboxylic acid functional group and the second functional group is a second group selected from a hydroxyl functional group and a carboxylic acid functional group, wherein the first functional group is different from the second functional group, wherein compound B comprises an aliphatic group comprising at least 19 carbon atoms. Hence, the ester compound may consist essentially of a condensation product of a first reactant and a second reactant, wherein the first reactant is a compound A comprising at least 5 hydroxyl functional groups and wherein the second reactant comprises at least one compound B, wherein the at least one compound B comprises a carboxylic functional group. Alternatively, the ester compound may consist essentially of a condensation product of a first reactant and a second reactant, wherein the first reactant is a compound A comprising at least 5 carboxylic acid functional groups and wherein the second reactant comprises at least one compound B, wherein the at least one compound B comprises a hydroxyl functional group.

Preferably, compound B comprises only one second group. In case the second group is a hydroxyl functional group, the compound B preferably comprises only one hydroxyl functional group. In case the second group is a carboxylic acid group, the compound B preferably comprises only one carboxylic acid group.

At least one compound B may be used as second reactant. Compound B may be a compound according to the structure R-X, wherein X is a hydroxyl group or a carboxylic acid group. R may be a hydrocarbon group. The hydrocarbon group may be linear, branched or comprise a cyclic structure. The hydrocarbon group may be a saturated hydrocarbon group. The hydrocarbon group may be linear, branched or comprise a cyclic structure. Alternatively, the hydrocarbon group may be an unsaturated hydrocarbon group. The unsaturated hydrocarbon group may comprise a carbon-carbon double bond. Optionally, the hydrocarbon group may comprise a reactive group, such as an acrylate group, a methacrylate group, a vinyl group or an ethylether group. If the hydrocarbon group comprises a reactive group, the ester compound may become covalently bound to the polymeric network formed upon curing the ink.

R may comprise at least 19 carbon atoms. R may comprise from 19 -36 carbon atoms, preferably from 20 to 30 carbon atoms.

Preferably, only one compound B is used as reactant. If only one compound B is used as reactant, the crystallization behavior of the ester compound may be better than if a plurality of compounds B are used. Preferably, compound B comprises a saturated hydrocarbon group.

The ester compound formed by reacting the first reactant and the second reactant may be a nonlinear ester compound. The ester compound may comprise at least five ester groups. Preferably, the ester compound may comprise at least six ester groups. The ester compound may provide the radiation curable inkjet ink composition with gelling properties.

The ester compound may be used as a gelling agent in a radiation-curable inkjet ink composition.

An ink composition comprising an ester compound in accordance with the present invention may be capable of providing prints having a high gloss.

In an aspect of the invention, use of an ester compound is provided, the ester compound consisting essentially of a condensation product of a first reactant and a second reactant, wherein the first reactant is a compound A comprising at least 5 first functional groups, and wherein the second reactant comprises at least one compound B, wherein the at least one compound B comprises a second functional group, wherein the first functional group is a first group selected from a hydroxyl functional group and a carboxylic acid functional group and the second functional group is a second group selected from a hydroxyl functional group and a carboxylic acid functional group, wherein the first functional group is different from the second functional group, wherein compound B comprises an aliphatic group comprising at least 19 carbon atoms.

Use of an ester compound in accordance with the present invention in an ink composition may allow to have prints having a high gloss level.

In an embodiment, the compound A is selected from the group consisting of cyclodextrine and dipentaerythritol, inositol and 1,2,3,4,5-cyclopentanepentol. Preferbaly, the compound A is selected from the group consisting of cyclodextrine and dipentaerythritol.

These compounds are compounds comprising at least 5 hydroxyl functional groups. When reacted with a carboxylic acid, ester compounds can be formed.

Esters obtainable by reacting a carboxylic ester with a compound A selected from the above listed group may be esters having a branched structure (i.e. non-linear esters). Methods for synthesizing ester compounds starting from a compound comprising a plurality of hydroxyl functional groups and a compound comprising a carboxylic acid group are known in the art.

In an embodiment, the compound B is a compound according to formula I;

formula I: R-C(O)OH;

wherein R is an aliphatic group having at least 19 carbon atoms. Compounds according to formula I are suitable to form ester compounds in accordance with the present invention. The properties of the ester compound may be influenced by the choice of the functional group R. The nature of the R group may for example influence the melting point of the ester compound and the rate of diffusion of the ester compound in the inkjet ink composition. The functional group R may be a group comprising 19-36 carbon atoms, preferably 20-30.

In a further embodiment, the compound B is a fatty acid. Fatty acids are suitable for forming esters, when reacted with a compound comprising an hydroxyl functional group. The fatty acids may be saturated or non-saturated fatty acids. Non-saturated fatty acids may be monounsaturated fatty acids or polyunsaturated fatty acids. Non-saturated fatty acids comprise an alkene functional group. Upon curing of the ink, the alkene functional group may react and the ester compound may be incorporated in the network formed by the radiation-curable component. Preferably, the fatty acid is a saturated fatty acid.

In a further embodiment, the ester compound is a fatty acid ester of dipentaerythritol. Fatty acid esters of dipentaerythritol are ester compounds that may be suitably used as ester compound in a radiation-curable ink composition.

In a further embodiment, the ester compound is dipentaerythritolhexabehenate.

Dipentaerythritolhexabehenate is an ester obtainable by reacting dipentaerythritol and behenic acid. Behenic acid (CH₃(CH₂)₂₀COOH) is a fatty acid.

In an embodiment, the gellant is present in an amount of 0.2 wt% - 4.0 wt% based on the total weight of the radiation-curable inkjet ink composition. For example, the gellant may be present in an amount of 0.5 wt% to 3.0 wt% based on the total weight of the radiation-curable inkjet ink composition, such as from 0.8 wt% - 2.5 wt% based on the total weight of the radiation-curable inkjet ink composition, such as from 1.0 wt% - 2.0 wt% based on the total weight of the radiation-curable inkjet ink composition.

It was surprisingly found that a small amount of the gellant in accordance with the present invention may suffice to efficiently increase the viscosity of the radiation curable inkjet ink composition in between jetting of a droplet onto a recording medium and curing of the ink by irradiation.

Gellants may form three dimensional structures below a gelling temperature. Hence, when the inkjet ink composition is gelled, a three dimensional structure of the gellant may form in the inkjet ink composition. Such three dimensional structure may comprise crystals. The presence of crystals may decrease the gloss level of a print made using the inkjet ink composition. Therefore, decrease of the gloss level may be prevented by using only small amounts of gellant, for example 0.2 wt% - 4.0 wt% based on the total weight of the radiation-curable inkjet ink composition.

In an embodiment, the radiation curable component is an acrylate having two or more acrylate functional groups. An acrylate may undergo a polymerization reaction when irradiated by suitable radiation, such as UV radiation. Hence, a polyacrylate polymer may be formed when an inkjet ink composition comprising an acrylate is cured, thereby hardening the ink. An acrylate molecule having two or more acrylate functional groups may react with two or more other acrylate molecules and hence, a polymeric network may be formed. Examples of acrylates having two or more acrylate functional groups are known in the art.

In a further embodiment, the ink composition further comprises a monofunctional acrylate. Presence of a monofunctional acrylate may improve the hardness and flexibility of the ink layer after curing.

In an embodiment, an ink set is provided, wherein the ink set comprises a radiation-curable inkjet ink composition according to the present invention.

An ink set may comprise a plurality of different inks. For example, the ink set may be a CMYK ink set, comprising a Yellow, a Magenta, a Cyan and a blacK ink composition. At least one of the ink compositions in the ink set may be an ink comprising a gellant, wherein the gellant is a compound according to formula I as described above. Preferably, a plurality of the ink compositions in the ink set may comprise a gellant, wherein the gellant is a compound according to formula I as described above. The ink set may further comprise additional colors, such as white, red, green, light magenta, light cyan and/or grey. Further, the ink set may comprise one or more metallic ink compositions. Optionally, the ink set may comprise an undercoat and/or an overcoat composition. The undercoat and/or overcoat composition may be colorless ink compositions.

An ink set, wherein at least one of the inkjet ink compositions comprises an ester compound in accordance with the present invention may allow to make prints having high gloss.

In an embodiment, an ink container is provided, the ink container comprising a radiation-curable ink composition according to the present invention.

The ink container may be configured to hold an amount of ink. The container may be used to store and transport ink. The ink container may be connectable to a printer, to allow transferring the ink from the container to the printer. The container may stay connected to the printer and gradually supply ink to the printer. Alternatively, the ink comprised in the container may be transferred to the printer and stored in the printer in an internal ink reservoir.

The ink container may be for example an ink bottle, an ink cartridge or an ink bag, for example a bag-inbox. Preferably, the ink container is not transparent for light and UV-radiation.

In an embodiment, a set of ink containers may be provided, each container of the set of containers comprising an individual ink from a set of inks.

In an aspect of the invention, use of an ester compound in a radiation-curable inkjet ink composition is provided, the ester compound consisting essentially of a condensation product of a first reactant and a second reactant, wherein the first reactant is a compound A comprising at least 5 first functional groups, and wherein the second reactant comprises at least one compound B, wherein the at least one compound B comprises a second functional group, wherein the first functional group is a first group selected from a hydroxyl functional group and a carboxylic acid functional group and the second functional group is a second group selected from a hydroxyl functional group and a carboxylic acid functional group, wherein the first functional group is different from the second functional group, wherein compound B comprises an aliphatic group comprising at least 19 carbon atoms.

Such ester compound may be suitably used in radiation-curable inkjet ink composition as a gellant.

In an aspect of the invention, a method for preparing a radiation-curable inkjet ink composition is provided, the method comprising the steps of:
- providing a radiation-curable component;
- providing an ester compound, the ester compound consisting essentially of a condensation product of a first reactant and a second reactant, wherein the first reactant is a compound A comprising at least 5 first functional groups, and wherein the second reactant comprises at least one compound B, wherein the at least one compound B comprises a second functional group, wherein the first functional group is a first group selected from a hydroxyl functional group and a carboxylic acid functional group and the second functional group is a second group selected from a hydroxyl functional group and a carboxylic acid functional group, wherein the first functional group is different from the second functional group, wherein compound B comprises an aliphatic group comprising at least 19 carbon atoms;
- mixing the radiation curable component and the ester compound.

The radiation-curable component and the ester compound may be provided. Optionally, additional components may be provided, for example an additional solvent. The radiation-curable component and the ester compound may be provided neat or they may be provided in a solution or dispersion. Optionally, a colorant may be provided. In case the colorant is a pigment, the pigment is preferably provided as a dispersion, such as a dispersion of the pigment in one or more radiation-curable components. The components may be provided at once, or the components may be added subsequently. The components may be added in any suitable order. In case a dispersible component is added (e.g. a pigment), such dispersible component may be preferably added after the other components of the ink composition are provided. Mixing of the components may be carried out at any suitable temperature, for example room temperature. Alternatively, mixing of the components may be carried out at elevated temperature.

In an aspect of the invention, a method for applying an image onto a recording medium is provided, the method comprising the steps of:
a. jetting droplets of a radiation-curable inkjet ink composition according to the present invention onto the recording medium;
b. curing the radiation-curable inkjet ink composition by irradiating the ink composition using UV radiation.

In the method, an image is applied onto a recording medium. In the method, in step a), an image is applied to the recording medium. The image may be applied using an ink composition according to the present invention. The ink composition may be applied onto the recording medium in a predetermined fashion, e.g. in accordance with image files stored on suitable storing means. The image may be applied for example by jetting droplets of the radiation-curable inkjet ink composition using an inkjet print head. The recording medium may be a sheet-like medium, such as a sheet of paper or a sheet of vinyl. Alternatively, the recording medium may be a web, for example an endless belt. The web may be made of a suitable material. Optionally, the image may be dried after it has been applied onto the intermediate transfer member.

In the method, in step b), the radiation-curable inkjet ink composition is cured by irradiating the ink composition using UV radiation. The inkjet ink composition may be irradiated using a suitable source of radiation, such as a halogen lamp, a mercury lamp and/or a LED lamp. Optionally, a plurality of sources of radiation may be used to irradiate the inkjet ink composition.

### Brief description of the drawings

These and further features and advantages of the present invention are explained hereinafter with reference to the accompanying drawings showing non-limiting embodiments and wherein:
Fig. 1 is a schematic perspective view of a first example of a printing system according to the present invention in a first printing mode;
Fig. 2 is a schematic perspective view of a second example of a printing system according to the present invention in a second printing mode;
Fig. 3 is a schematic diagram of a control unit of a reprographic system according to Fig. 1 or 2.

In the drawings, same reference numerals refer to same elements.

### Detailed description of the drawings

The present invention will now be described with reference to the accompanying drawings, wherein the same reference numerals have been used to identify the same or similar elements throughout the several views.

### Printing system

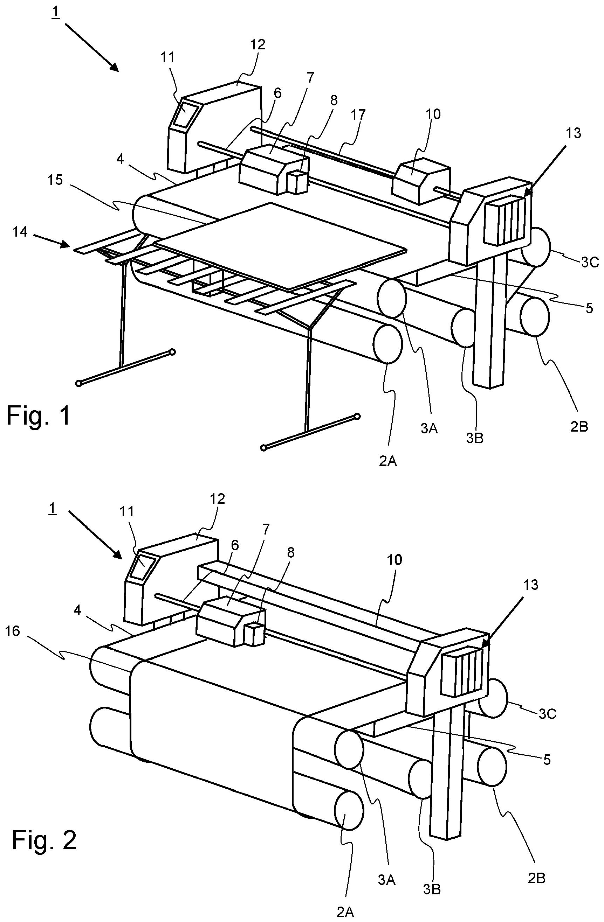

Fig. 1 shows a printing apparatus. A printing apparatus is also known as a printer. The printing apparatus 1 comprises an scanning printing unit 7 for printing on a recording medium 15. The recording medium 15 in Fig. 1 is a relatively rigid substrate, such as a panel. The recording medium 15 is supplied from a media input unit 14, which may be configured for storing a plurality of such print media 15 and supplying these to the printer 1. The printer 1 comprises a medium support 4. Printer 1 may further comprise transport means for receiving and transporting the recording medium 15 along the scanning printing unit 7. In Fig. 1, the medium support is embodied as an endless belt 4. The endless belt is an endless transport belt 4 supported on a plurality of support rollers 3A, 3B, 3C. At least one of the support rollers 3A, 3B, 3C is provided with driving means for moving the belt 4. The belt 4 is therefore configured to support and transport the recording medium. Additionally, one or more one of the support rollers 3A, 3B, 3C may be configured to be moved and/or tilted to adjust and control the lateral position of the belt 4. The scanning printing unit 7may be provided with a sensor 8, such as a CCD camera, to determine the relative position of belt 4 and/or the recording medium 15. Data from said sensor 8 may be applied to control the position of the belt 4 and/or the recording medium 15. The belt 4 is further provided with through-holes and a suction box 5 in connection with a suction source (not shown), such that an underpressure may be applied to the recording medium 15 via the through-holes in the belt 4. The underpressure adheres the recording medium 15 flatly to the belt 4 and prevents displacement of the recording medium 15 with respect to the belt 4. Due to this holding the belt 4 is able to transport the recording medium 15. It will be appreciated that other suitable transport means, such as rollers, steppers, etc, may alternatively be applied. The recording medium 15 may be transported stepwise and/or in continuous movement. The scanning printing unit 7 is configured to translate along a first guide beam 6 in a scanning direction. The scanning direction is perpendicular to the direction in which the print medium is transported by the belt 4. The scanning printing unit 7 holds a plurality of print heads (not shown), which are configured to jet a plurality of different marking materials (different colors of ink, primers, coatings, etc.) on the recording medium 15. Each marking material for use in the scanning printing unit 7 is stored in one of a plurality of containers arranged in fluid connection with the respective print heads for supplying marking material to said print heads to print an image on the recording medium 15.

The application of the marking material, such as the radiation-curable ink from the printing units is performed in accordance with data provided in the respective print job. The printing unit may comprise one or more inkjet print heads. The timing by which the droplets of marking material are released from the one or more print heads determines their position on the recording medium 15. The timing may be adjusted based on the position of the scanning printing unit 7 along the first guide beam 6. The above mentioned sensor 8 may therein be applied to determine the relative position and/or velocity of the scanning printing unit 7 with respect to the recording medium 15. Based upon data from the sensor 8, the release timing of the marking material may be adjusted.

Upon ejection of the marking material, some marking material may be spilled and stay on a nozzle surface of the print heads. The marking material present on the nozzle surface, may negatively influence the ejection of droplets and the placement of these droplets on the recording medium 15. Therefore, it may be advantageous to remove excess of marking material from the nozzle surface. The excess of marking material may be removed for example by wiping with a wiper and/or by application of a suitable anti-wetting property of the surface, e.g. provided by a coating.

The marking materials may require treatment to properly fixate them on the print medium. Thereto, a fixation unit is provided downstream of the scanning printing unit 7. The fixation unit may emit radiation to facilitate the marking material fixation process. In the example of Fig. 1, the fixation unit is scanning curing array 10.

The scanning curing unit comprises at least one radiation emitting unit (not shown). In operation, the curing unit 10 is moved in reciprocation in the scanning direction along guide rail 17. Further, the inkjet printing assembly 7 may be provided with a further fixation unit on the same carriage which holds the print heads. This further fixation unit can be used to (partially) cure and/or harden the marking materials, independent of or interaction with the fixation unit 10.

The scanning curing array 10 is configured to in operation emit radiation of certain frequencies, which interacts with the marking materials, for example UV light in case of UV-curable inks. Optionally (not shown), the scanning printing unit 7 may be provided with a further fixation unit on the same carriage which holds the print heads. This further fixation unit can be used to (partially) cure and/or harden the marking materials, independent of or interaction with the scanning curing array 10.

After printing and fixation, the recording medium 15 is transported to a receiving unit (not shown). The receiving unit may comprise a take-up roller for winding up the recording medium 15, a receiving tray for supporting sheets of recording medium 15, or a rigid media handler, similar to the media input unit 14. Optionally, the receiving unit may comprise processing means for processing the medium after printing, e.g. a posttreatment device such as a coater, a folder, a cutter, or a puncher.

Printing apparatus 1 furthermore comprises a user interface 11 for receiving print jobs and optionally for manipulating print jobs. The local user interface unit 11 is integrated to the print engine and may comprise a display unit and a control panel. Alternatively, the control panel may be integrated in the display unit, for example in the form of a touchscreen control panel. The local user interface unit 11 is connected to a control unit 12 connected to the printer 1. The control unit 12, for example a computer, comprises a processor adapted to issue commands to the printer 1, for example for controlling the print process. The printer 1 may optionally be connected to a network. The connection to the network can be via cable or wireless. The printer 1 may receive printing jobs via the network. Further, optionally, the control unit 12 of the printer 1 may be provided with an input port, such as a USB port, so printing jobs may be sent to the printer 1 via this input port.

### Hybrid printing system

The printer 1 in Fig. 1 is a so-called hybrid printer, capable of handling both flexible media and rigid substrates. In Fig. 1, the printer 1 operates in a first print mode, wherein the printer 1 is configured for transporting rigid substrates, such as the recording medium 15. Such rigid print media 15 may be panels, for example panels for doors or walls, corrugated media, plates formed of plastic or metal, etc. To handle these rigid print media 15, the printer 1 in Fig. 1 is configured with a substantially linear transport path: from the media input device 14, the recording medium 15 moves forward along the scanning printing unit 7 at a at substantially constant height. The media input unit 14 and the receiving unit are positioned at the level of the medium support surface of the belt 4. In Fig. 2, a flexible web medium 16 is supplied to the printer 1, which web medium 16 may be composed of e.g. paper, label stock, coated paper, plastic or textile. The web medium 16 is supplied from the input roller 2A and extends across the belt 4 to the take-up roller 2B, where the web medium 16 is re-wound. The printer 1 is configured to swiftly and efficiently switch between print modes.

Further, the printer 1 shown in Fig.2 comprises a page-wide curing array 10. The page-wide curing array extends in the main scanning direction. The page-wide curing array does not move in operation in the main scanning direction. The page-wide array may move in the direction of medium transport, which is a direction perpendicular to the scanning direction.

### Control

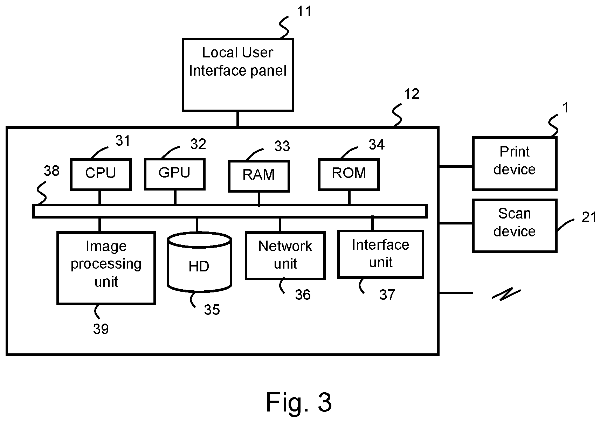

An embodiment of the control unit 12 is in more detail presented in Fig. 3. As shown in Fig. 3, the control unit 12 comprises a Central Processing Unit (CPU) 31, a Graphical Processor Unit (GPU) 32, a Random Access Memory (RAM) 33, a Read Only Memory (ROM) 34, a network unit 36, an interface unit 37, a hard disk (HD) 35 and an image processing unit 39 such as a Raster Image Processor (RIP). The aforementioned units 31 - 37 are interconnected through a bus system 38. However, the control unit 12 may also be a distributed control unit.

The CPU 31 controls the printing system 1 in accordance with control programs stored in the ROM 34 or on the HD 35 and the local user interface panel 11. The CPU 31 also controls the image processing unit 39 and the GPU 32. The ROM 34 stores programs and data such as boot program, set-up program, various set-up data or the like, which are to be read out and executed by the CPU 31. The hard disk 35 is an example of a non-volatile storage unit for storing and saving programs and data which make the CPU 31 execute a print process to be described later. The hard disk 35 also comprises an area for saving the data of externally submitted print jobs. The programs and data on the HD 35 are read out onto the RAM 33 by the CPU 31 as needed. The RAM 33 has an area for temporarily storing the programs and data read out from the ROM 34 and HD 35 by the CPU 31, and a work area which is used by the CPU 31 to execute various processes. The interface unit 37 connects the control unit 12 to the client devices, such as scan device 21 and to the printing system 1. The network unit 36 connects the control unit 12 to the network N and is designed to provide communication with the workstations (not shown) and with other devices 21 reachable via the network N. The image processing unit 39 may be implemented as a software component running on an operation system of the control unit 12 or as a firmware program, for example embodied in a field-programmable gate array (FPGA) or an application-specific integrated circuit (ASIC). The image processing unit 39 has functions for reading, interpreting and rasterizing the print job data. Said print job data contains image data to be printed (i.e. fonts and graphics that describe the content of the document to be printed, described in a Page Description Language or the like), image processing attributes and print settings.

### Experiments and examples

### Materials

SR355, SR339C, SR506D, SR531 and CN991 were obtained from Arkema, Genomer 5161, ITX and EDB were obtained from Rahn, BYK 333 was obtained from BYK, pentaerythritoltetrastearate, pentaerythritoltetrabehenate and behenic acid were obtained from TCI chemicals, BAPO was obtained from Arkema (Lambson), dipentaerythritol was obtained from Sigma Aldrich, phenothiazine was obtained from Allessa. All chemical were used as received.

Avery MPI2000 HOP, which was obtained from Avery Denison was used as recording medium.

The synthesis of dipentaerythritolhexabehenate is described below.

### Methods

### image formation

Prints were prepared by printing the ink using a Colorado 1650 printer. The temperature of the recording medium was controlled to be 24°C or 28°C. Avery MPI2000 HOP was used as recording medium.

### Gloss

The gloss of an image was measured after the image had been printed and cured. The gloss was measured using a micro-TRI glossmeter obtained from BYK-Gardner GmbH using the internal calibration and measurement method. The micro-TRI gloss measuring device simultaneously measures the gloss under an angle of 20°, 60° and 85°, respectively. The gloss level reported is the gloss level measured under an angle of 60°. A high value relates to a high gloss level, a low value relates to a low gloss level (matt).

### Example 1: Synthesis of dipentaerythritolhexabehenate

Di-pentaerythritol (**2**, 16.59 g, 65.24 mmol) and docosanoic acid (also named behenic acid; **1**, 160 g, 469 mmol, 7.2 eq) were mixed, stirred and slowly heated using an oil bath of 200°C. The mixture was kept under an argon flow, thus removing the water from the reaction mixture. The conversion was monitored using ¹H-NMR. After 68h at 200°C the reaction was stopped, even though the reaction had not completed yet (about 93%). The mixture was cooled down to about 100°C, and poured into a mixture of chloroform and acetone (3:2, about 3 L) giving a precipitate. The mixture was heated until all precipitate had re-dissolved, and was then allowed to slowly cool down to room temperature giving a precipitate. The precipitate was filtrated over a glass filter and was washed twice with a mixture of chloroform and acetone 1:2 (450 mL in total) and then with acetone (about 1 L). The residue was recrystallized from chloroform and acetone 3:1. The precipitate was filtrated, washed and dried in vacuo to give an off-white solid (126 g, 57.6 mmol, 88%) with a purity of about 96% (¹H-NMR). By-products were pentaerythritoltribehenate and pentaerythritoltetrabehenate.

¹H NMR (400 MHz, Chloroform-d) δ 4.07 (s, 12H), 3.38 (s, 4H), 2.28 (t, *J* = 7.6 Hz, 12H), 1.59 (h, *J* = 5.7, 4.5 Hz, 12H), 1.25 (m, 216H), 0.88 (t, *J* = 6.8 Hz, 18H). MALDI-TOF-MS: C₁₄₂H₂₇₄O₁₃, calculated m/z = 2189.74, observed: [M+Na]⁺ 2212.12, [M+K]⁺ 2228.12, using either CHCA (α-cyano-4-hydroxycinnamic acid) or DCTB (trans-2-[3-(4-tert-butylphenyl)-2-methyl-2-propenylidene]malononitrile) matrices.

### Ink Example and Comparative Ink Examples

Ink compositions **Ex 1, CE1** and **CE 2** were prepared by providing the components shown in table 1 in the amount shown in table 1 and mixing the components.

The first ink composition is ink composition **Ex 1,** which is an ink composition according to the present invention.

The second ink composition is ink composition **CE1,** which is an ink composition not according to the present invention. Also the third ink composition **CE2** is an ink composition not according to the present invention.

**Table 1: Ink example Ex 1 and Comparative Ink Examples CE1 and CE2**

| Component | Ex 1 | CE1 | CE2 |
|---|---|---|---|
| SR339C | 19.63 wt% | 19.63 wt% | 19.63 wt% |
| SR506D | 19.63 wt% | 19.63 wt% | 19.63 wt% |
| SR531 | 19.64 wt% | 19.64 wt% | 19.64 wt% |
| CN991 | 23.00 wt% | 23.00 wt% | 23.00 wt% |
| SR355 | 1.50 wt% | 1.50 wt% | 1.50 wt% |
| BAPO | 1.00 wt% | 1.00 wt% | 1.00 wt% |
| ITX | 4.50 wt% | 4.50 wt% | 4.50 wt% |
| EDB | 4.50 wt% | 4.50 wt% | 4.50 wt% |
| Genomer 5161 | 5.00 wt% | 5.00 wt% | 5.00 wt% |
| BYK333 | 0.50 wt% | 0.50 wt% | 0.50 wt% |
| phenothiazine | 0.10 wt% | 0.10 wt% | 0.10 wt% |
| dipentaerythritolhexabehenate | 1 wt% | 0 | 0 |
| pentaerythritoltetrastearate | 0 | 1 wt% | 0 |
| pentaerythritoltetrabehenate | 0 | 0 | 1 wt% |

Dipentaerythritolhexabehenate is an ester compound obtainable by reacting dipentaerythritol, which is a compound comprising six hydroxyl functional groups, with behenic acid, which is a fatty acid of the formula CH₃(CH₂)₂₀COOH. Pentaerythritoltetrastearate is an ester compound obtainable by reacting pentaerythritol, which is a compound comprising four hydroxyl functional groups, with stearic acid, which is a fatty acid of the formula CH₃(CH₂)₁₆COOH. Pentaerythritoltetrabehenate is an ester compound obtainable by reacting pentaerythritol, which is a compound comprising four hydroxyl functional groups, with behenic acid, which is a fatty acid of the formula CH₃(CH₂)₂₀COOH.

Ink composition **Ex1** is an ink composition according to the present invention. Ink compositions **CE1** and **CE2** are ink compositions not according to the present invention.

### Comparison experiments.

A first series of prints was prepared at a recording medium temperature of 24°C using ink compositions **Ex1, CE1** and **CE2,** respectively. A second series of prints was prepared at a recording medium temperature of 28°C using ink compositions **Ex1, CE1** and **CE2,** respectively. The gloss levels of the printed images were measured. The results are summarized in table 2.

**Table 2: Comparison experiments**

| Print experiment | Ink Composition | Recording medium temperature | Gloss level |
|---|---|---|---|
| PE1 | **Ex1** | 24°C | 94 |
| CPE1 | **CE1** | 24°C | 20 |
| CPE2 | **CE2** | 24°C | 12 |
| PE2 | **Ex1** | 28°C | 76 |
| CPE3 | **CE1** | 28°C | 27 |
| CPE4 | **CE2** | 28°C | 13 |

PE1 and PE2 show a gloss level of 94 and 76, respectively. PE1 and PE2 are print experiments according to the present invention, made using ink **Ex1,** which is an ink composition according to the present invention.

CPE1 and CPE3 show a gloss level of 20 and 27, respectively. CPE1 and CPE3 are print experiments not according to the present invention, made using ink **CE1,** which is an ink composition not according to the present invention. CPE2 and CPE4 show a gloss level of 12 and 13, respectively. CPE2 and CPE4 are print experiments not according to the present invention, made using ink **CE2,** which is an ink composition not according to the present invention.

The gloss levels obtained in the print experiments according to the present invention, made with an ink according to the present invention, are considerably higher than the gloss levels obtained in the print experiments not according to the present invention, made with an ink not according to the present invention.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually and appropriately detailed structure. In particular, features presented and described in separate dependent claims may be applied in combination and any combination of such claims are herewith disclosed. Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

## Claims

1. Radiation-curable inkjet ink composition comprising a radiation curable component, the radiation-curable inkjet ink composition further comprising an ester compound, the ester compound consisting essentially of a condensation product of a first reactant and a second reactant, wherein the first reactant is a compound A comprising at least 5 first functional groups, and wherein the second reactant comprises at least one compound B, wherein the at least one compound B comprises a second functional group, wherein the first functional group is a first group selected from a hydroxyl functional group and a carboxylic acid functional group and the second functional group is a second group selected from a hydroxyl functional group and a carboxylic acid functional group, wherein the first functional group is different from the second functional group, wherein compound B comprises an aliphatic group comprising at least 19 carbon atoms.

2. Radiation-curable inkjet ink composition according to claim 1, wherein the compound A is selected from the group consisting of cyclodextrine and dipentaerythritol.

3. Radiation-curable inkjet ink composition according to claim 1 or 2, wherein the compound B is a compound according to formula I;
formula I: R-C(O)OH;
wherein R is an aliphatic group having at least 19 carbon atoms.

4. Radiation-curable inkjet ink composition according to claim 3, wherein the ester compound is a fatty acid ester of dipentaerythritol.

5. Radiation-curable inkjet ink composition according to claim 4, wherein the ester compound is dipentaerythritolhexabehenate.

6. Radiation-curable inkjet ink composition according to any of the preceding claims, wherein the radiation curable component is an acrylate having two or more acrylate functional groups.

7. Radiation-curable inkjet ink composition according to claim 6, wherein the ink composition further comprises a monofunctional acrylate.

8. Radiation-curable inkjet ink composition according to any of the preceding claims, wherein the ester compound is a gelling agent.

9. Ink container comprising a radiation-curable ink composition according to claims 1-8.

10. Method for preparing a radiation-curable inkjet ink composition according to claim 1 - 8, the method comprising the steps of:
• providing a radiation curable component;
• providing an ester compound, the ester compound consisting essentially of a condensation product of a first reactant and a second reactant, wherein the first reactant is a compound A comprising at least 5 first functional groups, and wherein the second reactant comprises at least one compound B, wherein the at least one compound B comprises a second functional group, wherein the first functional group is a first group selected from a hydroxyl functional group and a carboxylic acid functional group and the second functional group is a second group selected from a hydroxyl functional group and a carboxylic acid functional group, wherein the first functional group is different from the second functional group, wherein compound B comprises an aliphatic group comprising at least 19 carbon atoms; and
• mixing the radiation curable component and the ester compound.

11. Method for applying an image onto a recording medium, the method comprising the steps of :
**a.** jetting droplets of a radiation-curable inkjet ink composition according to any of claims 1-8 onto the recording medium;
**b.** curing the radiation-curable inkjet ink composition by irradiating the ink composition using UV radiation.

12. Use of an ester compound in a radiation-curable inkjet ink composition for obtaining a glossy image, the ester compound consisting essentially of a condensation product of a first reactant and a second reactant, wherein the first reactant is a compound A comprising at least 5 first functional groups, and wherein the second reactant comprises at least one compound B, wherein the at least one compound B comprises a second functional group, wherein the first functional group is a first group selected from a hydroxyl functional group and a carboxylic acid functional group and the second functional group is a second group selected from a hydroxyl functional group and a carboxylic acid functional group, wherein the first functional group is different from the second functional group, wherein compound B comprises an aliphatic group comprising at least 19 carbon atoms.
